**Europäisches Patentamt**

**European Patent Office**

**Office européen des brevets**

(19)

(11) Veröffentlichungsnummer: **0 015 487**
**B1**

(12) ## EUROPÄISCHE PATENTSCHRIFT

(45) Veröffentlichungstag der Patentschrift: **24.08.83**

(51) Int. Cl.³: **F 24 J 3/02**

(21) Anmeldenummer: **80100951.5**

(22) Anmeldetag: **26.02.80**

(54) Einrichtung zur Nutzbarmachung von Solarwärme.

(30) Priorität: **27.02.79 JP 21440/79**

(43) Veröffentlichungstag der Anmeldung:
**17.09.80 Patentblatt 80/19**

(45) Bekanntmachung des Hinweises auf die Patenterteilung:
**24.08.83 Patentblatt 83/34**

(84) Benannte Vertragsstaaten:
**DE FR IT NL**

(56) Entgegenhaltungen:
**FR - A - 2 247 683**
**FR - A - 2 304 791**
**FR - A - 2 318 395**
**JP - A - 52 048 702**
**US - A - 3 998 206**
**US - A - 4 038 972**

(73) Patentinhaber: **Nihon Chemical Plant Consultant Co., Ltd.**
**Nihon Building 2-6-2 Ohtemachi**
**Chiyoda-ku Tokyo (JP)**

(72) Erfinder: **Maruki, Saburo**
**430-3 Kamiwada**
**Yamato-Shi Kanagawa-Ken (JP)**

(74) Vertreter: **Lange, Gerd, Dipl.-Ing.**
**Nachtigallenweg 8 Postfach 2425**
**D-4950 Minden (DE)**

## Einrichtung zur Nutzbarmachung von Solarwärme

Die Erfindung bezieht sich auf eine Einrichtung zur Nutzbarmachung von Solarwärme, bei der eine rohrförmige Wärmesammlungseinheit im Brennpunkt eines Sonnenstrahlenreflektors in Form eines Paraboloids angeordnet ist. Eine Einrichtung dieser Art ist beispielsweise aus der DE—A—27 26 531 bekannt.

Zur optimalen Ausnutzung der Sonnenenergie ist es weiterhin bekannt, Einrichtungen dieser Art drehbar zu lagern, so daß der Sonnenstrahlenreflektor entsprechend dem Verlauf der Sonnenbahn gedreht werden kann. Die drehbare Anordnung eines Reflektors mit einer rohrförmigen Wärmesammlungseinheit ist aus der FR—A—2 304 791 bekannt. Für Reflektoren in Form eines Rotationsparaboloids mit einer kugelförmigen Wärmesammlungseinheit ist die dreh- und schwenkbare Lagerung des Reflektors aus der US—A—3 998 206 und der FR—A—2 318 395 bekannt.

Im Gegensatz zu kugelförmigen Wärmesammlungseinheiten, die auch ortsfest angeordnet sein können (vgl. US—A—3 998 206), muß eine rohrförmige Wärmesammlungseinheit stets zusammen mit dem Reflektor gedreht werden. Dabei behindern die üblicherweise an die Wärmesammlungseinheit angeschlossenen Zu- und Ableitungen für die Wärmetauscherflüssigkeit die Drehbarkeit der Einrichtung erheblich und blockieren eine Rundumdrehung des Reflektors.

Hier will die Erfindung Abhilfe schaffen. Die Erfindung, wie sie in den Ansprüchen gekennzeichnet ist, löst die Aufgabe, die Drehbarkeit von Einrichtungen dieser Art ohne Einschränkungen zu gewährleisten und insbesondere auch eine leicht gängige Drehung des Sonnenstrahlenreflektors einschl. der rohrförmigen Wärmesammlungseinheit zu ermöglichen.

Die Vorteile der Erfindung sind im wesentlichen darin zu sehen, daß der Sonnenstrahlenreflektor gemeinsam mit der Wärmesammlungseinheit auf einer vertikalen, mitten durch den Reflektor hindurchgehenden Drehwelle aufgelagert ist, die zugleich als Hohlwelle ausgebildet ist und zur Aufnahme der Zu- und Ableitung für die Wärmetauscherflüssigkeit dient. Alle von der vertikalen Drehwelle getragenen Bauteile sind mit Bezug auf die Drehachse ausbalanciert, so daß die Einrichtung eine leicht gängige Rundumdrehung ausführen kann. Wird die Einrichtung, die normalerweise mit Stellvorrichtungen dem Verlauf der Sonnenbahn nachgeführt wird, im Falle starker Windkräfte von den Stellvorrichtungen entkuppelt, dann kann sich der Reflektor problemlos nach der Windrichtung ausrichten, so daß eine erheblich verminderte Beschädigungsgefahr gegeben ist.

Weitere Vorteile, Merkmale und Einzelheiten der Erfindung ergeben sich aus nachfolgenden Beschreibung eines bevorzugten Ausführungsbeispiels unter Bezugnahme aud die beigefügten Zeichnungen. Dabei zeigt im einzelnen:

Fig. 1 die Draufsicht auf den Rahmen, wei er in der erfindungsgemäßen Einrichtung zur Nutzbarmachung von Solarwärme verwendet wird.

Fig. 2 eine Seitenansicht des Rahmens des Sonnenstrahlenreflektors gemäß Fig. 1.

Fig. 3 eine Teilansicht des in Fig. 2 dargestellten Rahmens des Sonnenstrahlenreflektors in größerem Maßstab,

Fig. 4 eine Seitenansicht der erfindungsgemäßen Einrichtung,

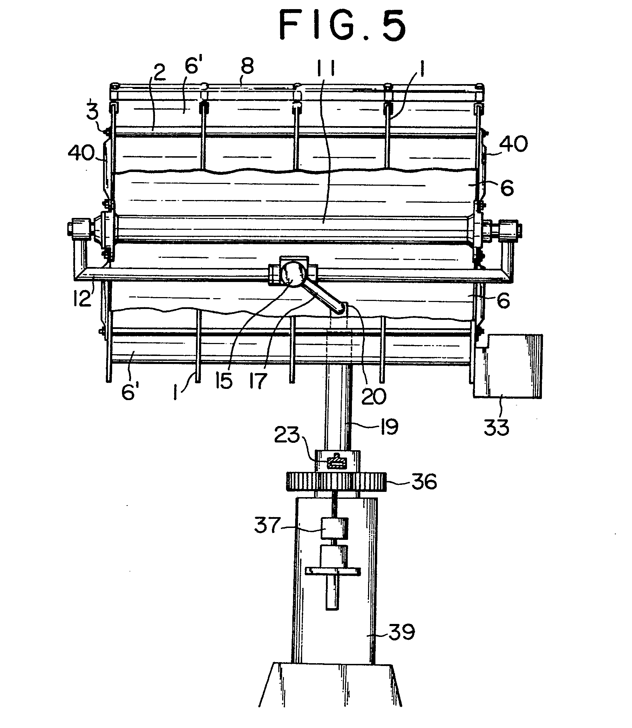

Fig. 5 eine Vorderansicht der in Fig. 4 dargestellten Einrichtung,

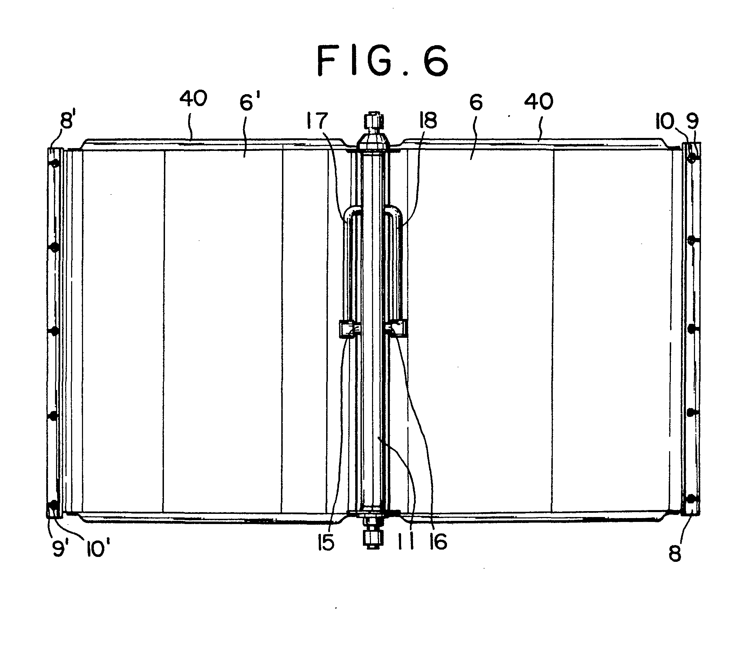

Fig. 6 die Draufsicht auf die in Fig. 4 dargestellte Einrichtung,

Fig. 7 eine Teilansicht des Mechanismus zur Verhinderung des Ablaufes kalter Flüssigkeit, wie er in der erfindungsgemäßen Einrichtung gemäß Fig. 4 eingesetzt wird,

Fig. 8 einen Schnitt durch die drehbare Doppelmantelhohlwelle und die feste Doppelmantelhohlwelle, wie sie in der erfindungsgemäßen Einrichtung zur Nutzbarmachung der Solarwärme gemäß Fig. 4 eingesetzt ist und

Fig. 9 ein schematisches Fließbild für die Flüssigkeitsströme innerhalb der in Fig. 4 dargestellten Einrichtung.

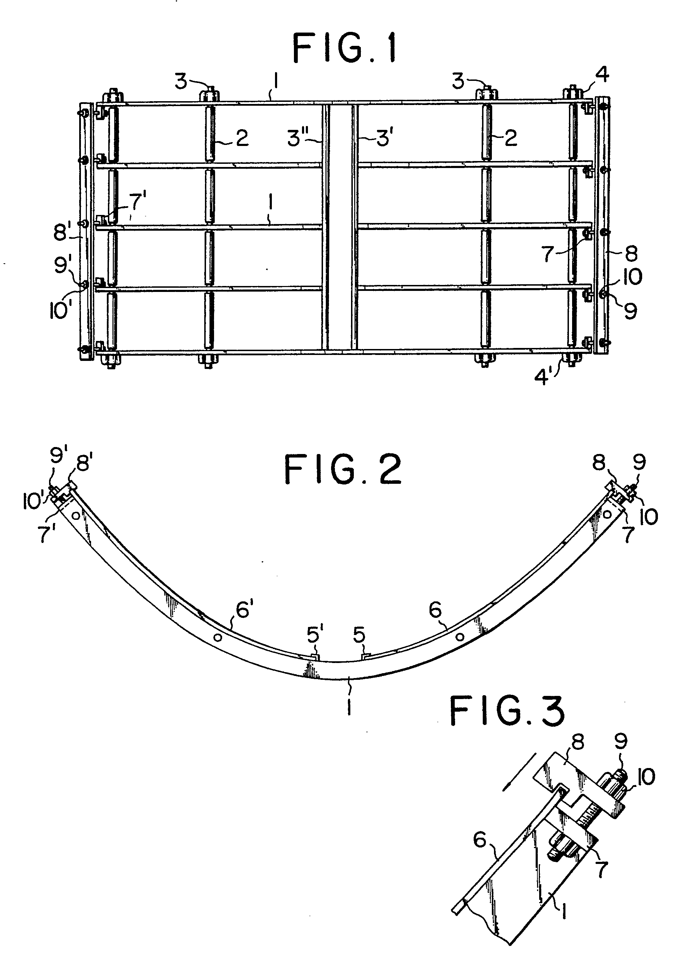

Die in den Fig. 1 bis 3 gezeigte Einrichtung weist mehrere Platten 1 auf, die die Form eines Paraboloid besitzen, wobei eine Anzahl derartiger Platten parallel und im Abstand zueinander angeordnet ist, wie dies die Fig. 1 zeigt, unter Bildung eines Gitterrahmens für einen Sonnenstrahlenreflektor. Flexible Metallplatten, die nachfolgend noch näher beschrieben werden sollen, sind entlang der Gitterstruktur des Rahmens in Form des Paraboloids gekrümmt und bilden die Spiegelfläche eines Reflektors. Die Platten 1 in der Form des Paraboloids können aus Metall, Holz oder Kunststoff bestehen, wobei man sie zweckmäßig herstellt, indem man einen Stapel derartiger Platten auf die gewünschte Länge und Form schneidet. Die geschnittenen Platten 1 werden dann nebeneinander und parallel zueinander in einem Abstand voneinander angeordnet unter Bildung der Gitterstruktur des Rahmens. Hohle Abstandselemente 2 sind jeweils zwischen benachbarten Platten 1 in einer Anzahl paralleler und im Abstand voneinander angeordneter Reihen in rechten Winkeln zu den Platten angeordnet, wobei die Abstandselemente 2 einer jeden Reihe koaxial aufeinander ausgerichtet sind, während eine Stange 3 durch die aufeinander ausgerichteten (nicht dargestellten) Löcher in den Platten 1 und den Abstandselementen 2 einer jeden Reihe hindurchgesteckt ist. Die einander gegenüberliegenden Enden einer jeden Stange 3 tragen Gewinde, auf welche Muttern 4, 4' aufgeschraubt sind, um die Elemente der Gitterstruktur des Rahmens festzuhalten.

Wie nachfolgend noch beschrieben werden wird, erstreckt sich eine vertikale, drehbare Welle durch den Gitterrahmen in dessen Mitte, so daß es erforderlich ist, daß die flexiblen Metallplatten, die die Spiegelfläche bilden, auf dem Rahmen in den Bereich, durch welchen sich die drehbare Welle erstreckt, unterbrochen sind. Zu diesem Zweck sind für die Bildung des Rahmens ein Paar paralleler Stangen 3' und 3" im Abstand voneinander im mittleren Bereich des Rahmens angeordnet, durch welchen sich die vertikale, drehbare Welle erstreckt. Somit sind bei der dargestellten Ausführungsform vorzugsweise die Zwischenplatten 1 mit Ausnahme der beiden äußeren Platten 1 im mittleren Bereich ausgeschnitten, so daß die Stangen 3' und 3" sich durch die Zwischenplatten 1 zwischen den äußeren Platten 1 erstrecken, und die beiden Metallplatten 6, die die Spiegelfläche bilden, sind vorzugsweise auf dem Gitterrahmen in einer einander gegenüberliegenden Anordnung im Abstand voneinander angeordnet, so daß sie einen Freiraum im mittleren Bereich des Rahmens belassen, durch welchen sich die vertikale, drehbare Welle erstreckt. Wenn die Metallplatten 6 so auf dem Gitterrahmen angeordnet sind, daß sie das gesamte Paraboloid bedecken, so muß die Spiegelfläche mit einem kreisförmigen oder ovalen Ausschnitt in dem Bereich versehen sein, durch welchen sich die vertikale, drehbare Welle erstreckt, da diese sonst die Spiegelfläche verbiegen könnte, was zu einer unerwünschten Reflektionsfläche oder Beschädigung der Paraboloidenkrümmung führen kann.

Innerhalb des oben beschriebenen Rahmens trägt jede der Platten 1 ein Paar einander gegenüberliegender und in einem Abstand voneinander angeordneter Haken 5 und 5' im mittleren Bereich, in welchem die Platte an den Stäben 3 und 3' befestigt ist. Ein Paar einander gegenüberliegender und im Abstand voneinander angeordneter Metallplatten 6 und 6' werden an ihren inneren Enden in den Haken 5 und 5' gehalten, während die äußeren Enden der Metallplatten mit Hilfe einer Schrauben- und Mutteranordnung an den entsprechenden Platten 1 befestigt sind. Ein paar von Halteelementen 7 und 7' ist einstückig an den gegenüberliegenden Enden einer jeden Platte 1 ausgebildet, une eine Paar von Rahmenteilen 8 und 8', die Einkerbungen zur Aufnahme der äußeren Enden der Platten 6 bzw. 6' aufweisen, sind an den Halteelementen 7 bzw. 7' mit Hilfe von Schraubbolzen 9 und 9' und Muttern 10 bzw. 10' befestigt. Da die Metallplatten 6 und 6' jeweils an den zugeordneten Platten 1 in der gleichen Weise befestigt sind, soll nachfolgend nur die Halterung einer einzigen Metallplatte 6 beschrieben werden, wobei die Beschreibung entsprechend auf die Befestigung der anderen Metallplatte 6' übertragen werden kann. Zunächst wird die Mutter 10 so weit gelöst, daß der Rahmenteil 8 einen Abstand von dem Halteelement 7 besitzt, der so groß ist, daß der Rahmenteil das äußere Ende der Metallplatte 6 in der Kerbe des Rahmenteils aufzunehmen vermag, worauf die Mutter 10 angezogen wird, um das äußere Ende der Metallplatte fest an der Platte 1 zu halten, ohne daß ein Spiel hierzwischen besteht. Hierauf wird, falls dies erwünscht oder erforderlich scheint, die Platte 1 und die Metallplatte 6 dauerhaft miteinander verbunden, was durch Punktschweißen oder Nieten geschehen kann, so daß ein Verbiegen der Spiegelfläche der Metallplatte 6 nicht eintritt.

Die Metallplatten 6 und 6', die die Spiegelfläche bilden, sind vorzugsweise aus Edelstahl hergestellt, wobei die Oberfläche der Spiegelfläche geglättet ist, oder eine Chromplattierung tragt.

Eine Wärmesammeleinheit 11 ist im Brennpunkt des Paraboloids des Sonnenstrahlenreflektors angeordnet. Eine solche Wärmesammeleinheit besteht üblicherweise aus einem Rohr aus Metall oder einem sonstigen geeigneten Material, wobei die herkömmliche rohrförmige Wärmesammeleinheit jedoch Einschränkungen unterliegt im Hinblick sowohl auf die Oberflächenreflektivität als auch die innere Oberflächengröße oder den Wärmeübergangsbereich, so daß die herkömmlichen Wärmesammeleinheiten keinen zufriedenstellenden Wärmesammelwirkungsgrad erreichen. Daher wird bei der Ausführungsform gemäß der Erfindung eine Wärmesammelleinheit eingesetzt, wie sie in dem Flüssigkeitsheizgerät Verwendung findet, das in der japanischen Patentveröffentlichung Nr. 48 702/1977 beschrieben ist. Die Wärmesammeleinheit ist zwar nicht im einzelnen inden beigefügten Zeichnungen beschrieben, aber sie umfaßt einen doppelwandigen Zylinder mit einem äußeren Zylinder aus einem transparenten Material wie Glas, der mit einer Flüssigkeit (normalerweise Wasser) gefüllt ist, so daß ein Linseneffekt entsteht, sowie aus einem koaxialen inneren Zylinder, der innerhalb des äußeren Zylinders angeordnet ist, in einem Bereich, der dem Brennpunkt der Linse oder des äußeren Zylinders entspricht und aus einem schwarzen porösen Material, wie porösem Graphit, gebildet ist.

Bei der dargestellten Ausführungsform der Erfindung besizt die Wärmesammeleinheit 11 ein Kreislaufführungsrohr 12, das hieran angeschlossen ist und parallel hierzu verläuft, wobei die zu erwärmende Flüssigkeit von dem Kreislaufführungsrohr 12 in den inneren porösen Graphitzylinder der Wärmesammeleinheit 12 einströmt, welcher durch die Absorption von Sonnenstrahlen aufgeheizt ist, wobei die Flüssigkeit den inneren Zylinder durchströmt und hierbei erhitzt wird. Die erhitzte Flüssigkeit strömt dann in den äußeren Zylinder der Wärmesammeleinheit und tritt durch den Auslaß des äußeren Zylinders aus, um in das Kreislaufführungsrohr 12 zurückzuströmen. In diesem Fall ergeben sich keine Schwierigkeiten, vorausgesetzt, daß das Konzentrationsverhältnis der Sonnenstrahlen in der Größenordnung vom 50-fachen liegt.

Da der Bereich der Spiegelfläche, der sich unterhalb der Wärmesammeleinheit 11 befindet, durch die Wärmesammeleinheit unterbrochen ist, kann dieser spezielle Bereich der Spiegelfläche die Sonnenstrahlen nicht reflektieren. Dementsprechend bildet das Kreislaufführungsrohr 12 unterhalb der Wärmesammeleinheit 11 einen Thermosyphon. Wenn der Thermosyphon nicht vorgesehen ist, besteht, wenn die Flüssigkeit durch die Wärmesammeleinheit in einer Richtung hindurchströmt, und wenn die Menge der absorbierten Sonnenstrahlen durch die Wärmesammeleinheit sowie die Einlaßtemperatur und die zu erhitzende Flüssigkeitsmenge nicht von Zeit zu Zeit eingestellt werden, die Schwierigkeit, daß die Flüssigkeitstemperatur am Auslaß des äußeren Zylinders der Wärmesammeleinheit 11, die höher ist als diejenige der Flüssigkeit am Einlaß des inneren Zylinders der Wärmesammeleinheit an dem Auslaß über den Siedepunkt hinaus ansteigt, so daß Dampf erzeugt wird und/oder die Flüssigkeit aus dem äußeren Zylinder zu der Zeit bei einer niedrigen Temperatur abgegeben wird, wenn die Flüssigkeit in die Wärmesammeleinheit einströmt. Der Thermosyphon behebt diese Schwierigkeiten und hält eine hinreichende Flüssigkeitsmenge innerhalb der Wärmesammeleinheit 11 und dem Kreislaufführungsrohr 12, gleicht die Temperaturveränderung in der Flüssigkeit aus und gibt soweit wie möglich die durchgelaufene oder erhitzte Flüssigkeit bei einer Temperatur in der Nähe des Siedepunktes ab.

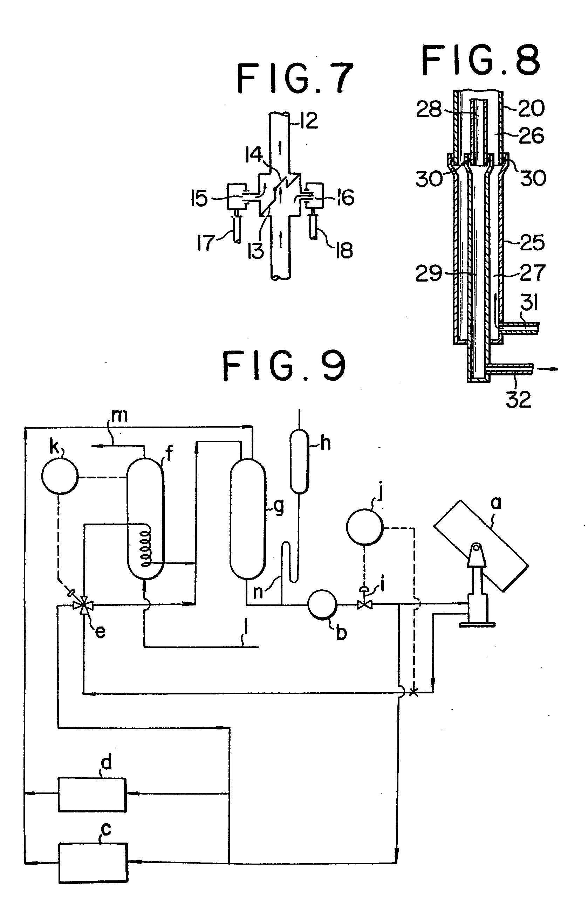

Das Kreislaufführungsrohr 12 ist in dem mittleren Bereich zwischen den beiden einander gegenüberliegenden Enden aufgebaucht, und ein Mechanismus, der die Abgabe kalter Flüssigkeit verhindert, ist innerhalb des aufgebauchten Mittelteiles vorgesehen. Wie die Fig. 7 deutlich zeigt, umfaßt dieser Mechanismus eine Teilungsplatte 13 sowie ein Rückschlagventil 14. An einander gegenüberliegenden Seiten des Rohres 12 ist ein Einlaßrohr 15 sowie ein Auslaßrohr 16 für die zu erhitzende Flüssigkeit vorgesehen, die parallel zu und in Verbindung mit dem Rohr 12 angeordnet sind. Ein Flüssigkeitszuführungsrohr 17 ist an das Einlaßrohr 15 angeschlossen, während ein Abführungsrohr 18 mit dem Auslaßrohr 16 in Verbindung steht. Das Zuführungsrohr 17 sowie das Abführungsrohr 18 sind an ein Doppelmantelrohr 20 angeschlossen, welches wiederum koaxial innerhalb der vertikalen, drehbaren Hohlwelle 19 angeordnet ist und sich mit dieser dreht.

Jede der Platten 1, die den Rahmen des Sonnenstrahlenreflektors bilden, ist mit einem Paar einander gegenüberliegender und im Abstand voneinander angeordneter Wellenhalteelemente 22 versehen, die symmetrisch in bezug auf die Mitte der Platte 1 angeordnet sind, zur Abstützung des inneren Endes von Horizontalwellen 21, deren äußere Enden drehbar in Lagerungen 24 gehalten sind, die wiederum in den freien Enden einander gegenüberliegender Schenkel eines U-förmigen Rahmens 23 gehalten sind, der an der vertikalen Welle 19 befestigt ist. Die Horizontalwellen 21 sind koaxial oder im wesentlichen koaxial auf das Einlaßrohr 15 und das Auslaßrohr 16 für die zu erhitzende Flüssigkeit ausgerichtet.

Der Grund, weshalb die Horizontalwellen 21 koaxial oder im wesentlichen koaxial zu dem Einlaßrohr 15 und dem Auslaßrohr 16 ausgerichtet sind, liegt darin, daß bei einer Drehung der Wellen 21 zur Schwenkung des Reflektors, um der sich ändernden Sonnehöhe im Verlauf des Tages zu folgen, die Rotation der Wellen 21 mit einem relativ geringen Kraftaufwand erfolgen kann. Um das Gewicht des Reflektors auf die Drehpunkte oder Horizontalwellen 21 im wesentlichen gleichmäßig zu verteilen, befindet sich das Kreislaufführungsrohr 12 vorzugsweise in einer Position gerade unterhalb und in der Nähe der Wärmesammeleinheit 11 parallel zu dieser. Wenn der Winkel der Außenkante des Reflektors in bezug auf dessen Mitte größer ist als 215°, befindet sich das Kreislaufführungsrohr 12 oberhalb und parallel zur Wärmesammeleinheit 11, so daß das Gewicht des Reflektors in einem ausbalancierten Zustand gehalten wird.

Die horizontalen Wellen 21 werden immer koaxial oder im wesentlichen koaxial zum Einlaßrohr 15 und zum Auslaßrohr 16 gehalten, währen sich der Reflektor dreht, da der Reflektor und dementsprechend auch das Kreislaufführungsrohr 12 so lange um die Horizontalwellen 21 drehbar sind, wie die relative Position zwischen den horizontalen Drehwellen 21 und dem Kreislaufführungsrohr 12 unverändert bleibt. Da sich das Einlaßrohr 15 und das Auslaßrohr 16 auf einander gegenüberliegenden Seiten des Kreislaufführungsrohres 12 in der gleichen Ebene befinden, ergibt sich, wenn der oben beschriebene Mechanismus zur Verhinderung der Abgabe kalter Flüssigkeit nicht innerhalb des Kreislaufführungsrohres 12 angeordnet ist, die Schwierigkeit, daß die zu erhitzende Flüssigkeit mit niederer Temperatur von dem Einlaßrohr 15 unmittelbar durch das Auslaßrohr ausströmt unter Umgehung der Wärmesammeleinheit 11, so daß die Flüssigkeit das System mit einer niedrigen Temperatur verläßt.

Der Grund, weshalb das Doppelmantelrohr 20 an des Zuführungsrohr 17 und das Abführungsrohr 18 angeschlossen ist, die wiederum mit dem Flüssigkeitseinlaßrohr 15 bzw. dem Flüssigkeitsauslaßrohr 16 verbunden sind, und das Doppelmantelrohr 20 sich koaxial innerhalb der Vertikalwelle 19 befindet, liegt darin, den Strahlungsbereich der Wärmesammeleinheit herabzusetzen und das Doppelmantelrohr 20 mit einer festen Welle zu verbinden, die sich unterhalb des Rohres befindet, wie nachfolgend noch beschrieben werden soll. Es wäre nicht möglich, das Doppelmantelrohr 20 frei zu drehen, wenn dieses Rohr 20 nicht die Form eines Doppelmantelaufbaues besäße und nicht koaxial innerhalb der Vertikalwelle 19 angeordnet wäre.

Wie bereits oben erwähnt, ist das drehbare Doppelmantelrohr an eine stationäre Welle 25 angeschlossen, die sich unterhalb des Doppelmantelrohres befindet, wobei die stationäre Welle ebenfalls einen Doppelmantelaufbau besitzt mit einem äußeren Rohr 27, das in Verbindung mit dem äußeren Rohr 26 des Doppelmantelrohres 20 steht, um einen Zuführungsdurchgang für die zu erhitzende Flüssigkeit zu bilden und einem koaxialen inneren Rohr 29, das in Verbindung mit dem inneren Rohr 28 des Doppelmantelrohres 20 steht, um einen Abführungsdurchgang für die Flüssigkeit nach deren Erwärmung zu bilden. Bei der dargestellten Ausführungsform ist eine Abdichtung zwischen den äußeren Rohren 26 und 27 der Doppelmantelrohre 20 bzw. 25 und zwischen den inneren Rohren 28 und 29 des Doppelmantelrohres und der stationären Welle 20 bzw. 25 nicht als besonders hochwertig erforderlich, sondern kann grade hinreichend sein, um ein Austreten der Flüssigkeit aus dem System heraus zu verhindern. Bei der dargestellten Ausführungsform wird die Dichtung durch den Einsatz von O-Ringen 30 bewerkstelligt.

Das äußere Rohr 27 und das innere Rohr 29 der stationären Welle 25 stehen mit einem Flüssigkeitszuführungsrohr 31 bzw. einem Flüssigkeitsableitungsrohr 32 in Verbindung. Die zu erwärmende Flüssigkeit von dem Zuführungsrohr 31 des stationären Rohres 25 durchläuft den Zuführungsdurchtritt, der zwischen den äußeren Rohren des Doppelmantelrohres 20 und der stationären Welle 25 gebildet wird, zu dem und durch das Zuführungsrohr 17 des Kreislaufführungsrohres 12, das an das äußere Rohr 26 des Doppelmantelrohres 20 angeschlossen ist, zur Erhitzung innerhalb des Kreislaufführungsrohres. Die erhitzte Flüssigkeit wird aus dem Kreislaufführungsrohr 12 durch das Abführungsrohr 18 zu dem inneren Rohr des Doppelmantelrohres 20 geleitet, das an das Abführungsrohr 18 angeschlossen ist, worauf sie von dem inneren Rohr 28 durch den Ablaßdurchlaß strömt, der zwischen dem inneren Rohr 28 des Doppelmantelrohres 20 und dem inneren Rohr 29 der stationären Welle 25 gebildet wird, zu dem und durch das Ableitungsrohr 32 der stationären Welle 25, um damit aus dem System herausgeleitet zu werden.

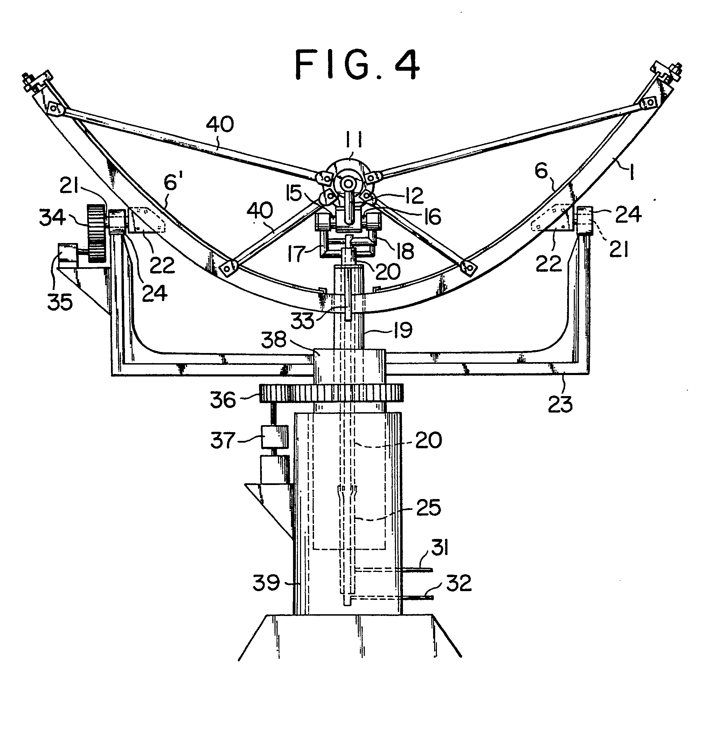

Wie in der Fig. 4 dargestellt ist, trägt eine der beiden äußeren Platten, aus welchen der Gitterrahmen des Reflektors besteht, ein Steuerelement 33. Die Bezugsziffer 34 ist einem Zahnrad zugeordnet, das am äußeren Ende einer der Horizontalwellen 21 befestigt ist. Mit 35 ist ein Antrieb wie beispielsweise ein Motor bezeichnet zum Antrieb der Horizontalwelle, dessen Ausgangswelle an ihrem inneren Ende ein Zahnrad trägt, das mit dem Zahnrad 34 kämmt. Die Bezugsziffer 36 ist einem Zahnrad zugeordnet, das mit einem Zahnrad auf der vertikalen, drehbaren Welle 19 kämmt und an der Ausgangswelle eines auskuppelbaren Antriebes 37 befestigt ist, der von einem Sockel 39 gehalten ist, welcher die Reflektoranordnung trägt. Schließlich bezeichnet die Bezugsziffer 38 ein Rohr, das an der vertikalen, drehbaren Welle 19 befestigt ist, und die Bezugsziffer 40 Haltestäbe für den Reflektor.

Bie der Ausführungsform der hier beschriebenen Einrichtung zur Nutzbarmachung von Solarwärme ist die Vertikalwelle 19 so ausgelegt, daß sie sich mit einer Geschwindigkeit dreht, die von der fixen Wanderungsgeschwindigkeit der Sonne abhängt, um die Bewegung der Sonne zu verfolgen. Wenn jedoch während der Sonnenverfolgung sich die Vertikalwelle 19 dreht, Wolkenmassen, wie beispielsweise während eines Regengusses, vorhanden sind, kann die Welle den Weg der Sonne nicht ausmachen. Wenn andererseits das Wetter nach einem heftigen, mehrere Stunden dauernden Regen sich wieder verbessert, tritt der Fall ein, daß die Sonnenstrahlen die Einrichtung zur Nutzbarmachung von Solarwärme von einer Richtung hinter dem Reflektor treffen. Da somit der Winkel des Richtelementes 180° überschreitet, welches die obere Grenze des für das Richtelement ausgelegten Gesichtsfeldes ist, wird ein zusätzliches Richtelement erforderlich, wodurch die Einrichtung zur Nutzbarmachung der Solarwärme verteuert wird. Um diese Schwierigkeiten zu überwinden, wurde eine Zeitkompensierungseinrichtung in Kombination mit der Einrichtung zur Nutzbarmachung der Solarwärme vorgesehen, die in der Lage ist, die Bewegungsgeschwindigkeit und die Richtung des Reflektors auf die Drehgeschwindigkeit und die Richtung der Sonne abzustimmen durch eine Drehung der Welle mit einer vorgegebenen Geschwindigkeit unabhängig von der Jahreszeit. Andererseits beträgt der mögliche maximale Höhenwinkel für den Reflektor der Sonne zu folgen 90°, und ein Folgen des Reflektors ist im allgemeinen unmöglich bei einem Höhenwinkel, der 10° unterschreitet in Abhängigkeit von dem Installationsort der Einrichtung, so daß es im allgemeinen hinreichend ist, den Reflektor um einen maximalen Winkel von 80° zu drehen. Bei einem Drehwinkelbereich des oben beschriebenen Reflektors hat sich die vertikale Welle in eine solche Position gedreht, daß der Reflektor bei Sonnenaufgang der Sonne zugewandt ist, womit, wenn die Horizontalwellen entsprechend der Höhenänderung der Sonne gedreht werden, die Einrichtung zur Nutzbarmachung der Sonnenwärme die Sonnenstrahlen in einer perfekten Weise Aufzunehmen vermag, solange die Sonne scheint.

Die Einrichtung zur Nutzbarmachung der Solarwärme gemäß der Erfindung wird bevorzugt gegen mögliche Schäden bei hohen Windgeschwindigkeiten geschützt, wobei es jedoch praktisch unmöglich ist, eine derartige Einrichtung so herzustellen, daß die Windgeschwindigkeiten bis zu 50 m/Sekunde zu widerstehen vermag, da eine derartige Einrichtung außerordentlich teuer werden würde, womit sich der Gebrauchswert der Einrichtung zur Nutzbarmachung der Solarwärme entsprechend verringert. Um dieses Problem zu lösen, ist gemäß der Erfindung die Einrichtung so ausgelegt, daß dann, wenn die Windgeschwindigkeit einen vorbestimmten Wert von beispielsweise 15 m/Sekunde erreicht, der Antrieb für die Horizontalwellen diese selbsttätig so dreht, daß die Sammeleinrichtung eine horizontale Position einnimmt, während der Antrieb für die Drehung der Vertikalwelle ausgekuppelt wird, so daß diese sich frei zu drehen vermag und das Stellelement an dem Reflektor die Querschnittsfläche des Reflektors der Windrichtung zuwendet.

Ein Windkraftmesser stellt die erfindungsgemäße Einrichtung wieder in ihre Betriebsstellung, wenn das dem Windkraftmesser zugeordnete Windgeschwindigkeitsmeßinstrument anzeigt, daß währen einer vorbestimmten Zeitdauer von beispielsweise 30 Minuten keine Windkräfte auftreten. Da in diesem Fall der Reflektor eine beliebige Winkelstellung einnehmen kann, wird eine Kompensationseinrichtung für die Zeit- und Winkeleinstellung verwendet, und um den Reflektor frei und unabhängig von jeglicher Windrichtung zu drehen, werden bevorzugt die Flüssigkeitszufuhr und -ableitungsdurchlässe durch das doppelwandige Rohr gebildet, wie dies oben beschrieben worden ist. Wenn die Horizontalwellen von einem Motor angetrieben werden, kann dieser vorteilhaft mit einer Verdrahtung versehen sein, die von der Vertikalwelle durch Reibung übertragen wird.

In Fig. 9 ist eine schematische Darstellung der Flüssigkeitsströmung wiedergegeben, wie sie gemäß der Einrichtung zur Nutzbarmachung der Solarwärme gemäß der Erfindung vorgesehen ist. Bei dem in der Einrichtung zu erwärmenden Medium handelt es sich bevorzugt um eine farblose und transparente Flüssigkeit, die eine hohe Wärme- und Lichtbeständigkeit, sowie einen niedrigen Verfestigungspunkt und einen hohen Siedepunkt aufweist und die nicht giftig ist. Eine Flüssigkeit, die diese Bedingungen erfüllt, ist Monopropylnaphtalin, welches einen Verfestigungspunkt von −50°C, einen Siedepunkt von 268°C und eine Viskosität von 3cp bei 50°C und 0,5 cp bei 150°C besitzt. Eine solche Flüssigkeit besitzt auch einen Heiztemperaturbereich bis zu 230 bis 240°C. Wenn in diesem Fall ein Regenerationstank verwendet wird, der eine Kapazität von 3 m³ besitzt, kann eine Wärmemenge von bis zu 100 000 Kcal erhalten werden bei einem Temperaturbereich von 200°C bis 90°C, womit

auch an einem Tag, wenn kein Sonnenschein verfügbar ist, kein zusätzlicher Brennstoff eingesetzt werden muß. Wenn andererseits Wasser als aufzuwärmende Flüssigkeit verwendet wird, kann eine Wärmemenge erhalten werden, die nur bei 10 000 Kcal in einem Temperaturbereich von 95°C bis 90°C liegt, womit irgendein anderer Hilfsbrennstoff noch erforderlich sein kann.

Wenn warmes Trinkwasser über eine längere Zeitdauer bei anghobener Temperatur gehalten werden soll, neigt das warme Wasser dazu, einen widerlichen Geruch abzugeben. Dementsprechend muß warmes Trinkwasser in einem Behälter untergebracht sein, der eine relativ kleine Kapazität besitzt, so daß der Inhalt häufig und schnell erhitzt werden kann, was dazu führt, daß man einen getrennten Warmwassertank vorsieht. Die Temperatur innerhalb des Regenerationstankes schwankt im allgemeinen in einem Bereich von 200 bis 90°C in Abhängigkeit von den jeweiligen Umständen, unter welchen die Wärmemenge gewonnen wird. Da die Flüssigkeit innerhalb der Einrichtung auf eine hohe Temperatur gebracht werden kann, läßt sich auch vorteilhaft eine Raumkühlung durchführen wenn ein Absorptionskühlsystem eingesetzt wird. Bei einer Raumheizung ist, wenn die Flüssigkeitsführung durch den Fußboden eines Raumes, der erwärmt werden soll, verläuft, nur etwa 70% der Wärmemenge erforderlich, die bei einem herkömmlichen Warmluftumlaufsystem aufzuwenden ist, bei welchem warme Luft durch den Raumfußboden im Kreislauf geführt wird. Auch ist die Flüssigkeitsmenge, die zu zirkulieren ist, geringer als diejenige bei dem Warmluftumlaufsystem, so daß die Rohrleitungen in dem Fußboden einen geringeren Durchmesser besitzen können.

Wie in der schematischen Darstellung des Fließbildes der erfindungsgemäßen Einrichtung gemäß Fig. 9 gezeigt ist, wird die Flüssigkeit von einem Regenerationsbehälter g durch eine Flüssigkeitsbeschickungspumpe b zur Einrichtung zur Nutzbarmachung von Solarwärme a gepumpt. In diesem Fall wird, um die Temperatur innerhalb der Flüssigkeitskreislaufführung bei einem Wert im Bereich zwischen 200 bis 220°C zu halten, die Pumpmenge oder Zufuhrmenge von Flüssigkeit durch die Funktion eines Temperatureinstellungsventils i über einen Temperaturfühler j eingestellt. Wenn warmes Wasser zu Trinkzwecken an einem Tag verbraucht wird, wenn kein Sonnenschein verfügbar ist, fällt die Temperatur innerhalb des Trinkwasserbehälters f ab, worauf ein Temperatureinstellgerät auf einen solchen Temperaturabfall der Flüssigkeit so anspricht, daß ein selbsttätiges Schaltventil e betätigt wird, so daß die Flüssigkeit von der Einrichtung zur Nutzbarmachung der Solarwärme a durch die Pumpe b über das selbsttätige Schaltventil i und den Trinkwassererhitzungsbehälter f in den Regenerationstank e fließt, womit die Temperatur innerhalb des Trinkwasserheizbehälters f angehoben wird. Auf diese Weise spricht, wenn die Temperatur innerhalb des Trinkwasserheizbehälters f auf einen hinreichenden oder vorbestimmten Wert angehoben ist, das Temperatureinstellgerät k in einer solchen Weise auf den Temperaturanstieg an, daß der Flüssigkeitsstrom durch die Betätigung des Schaltventils e unterbrochen wird. Während die Einrichtung zur Nutzbarmachung der Solarwärme in einer zufriedenstellenden Weise arbeitet und auch wenn die Temperatur innerhalb des Trinkwasserheiztankes f auf einen vorbestimmten Wert gestiegen ist, spricht das Temperatureinstellgerät k auf einen solchen Temperaturanstieg an, wodurch der Flüssigkeitsstrom, der normalerweise durch das automatische Ventil e und den Trinkwasserheizbehälter f zum Regenerationstank g fließt, geändert wird in einen Flüssigkeitsstrom, der dann von dem selbsttätigen Schaltventil i zum Regenerationsbehälter g fließt. Wenn der Sonnenschein ausreicht und Solarwärme in einer Menge verfügbar ist, die über die vom Trinkwasserheiztank f verbrauchte Menge hinausgeht, wie auch über die von dem Kühlsystem c und dem Heizsystem d verbrauchte, so steigt die Temperatur innerhalb des Regenerationstankes g an. Wenn die Temperatur innerhalb des Regenerationstankes g einen vorbestimmten Wert erreicht, unterbricht der Reflektor der erfindungsgemäßen Einrichtung die Verfolgung der Sonne. Das lichtempfindliche Richtelement, das die Verfolgung der Sonne und die Unterbrechung der Verfolgung bewirkt, ist hier nicht im einzelnen dargestellt und beschrieben.

Innerhalb des Leitungssystems ist ein Flüssigkeitsexpansionstank h vorgesehen, der Veränderungen des Flüssigkeitsvolumens in dem System entsprechend der Temperaturveränderung innerhalb des Systems auszugleichen vermag. Zu diesem Zweck wird die Temperatur innerhalb des Flüssigkeitsexpansionsbehälters h über einen U-Verschluß n auf einem mäßigen Wert gehalten. In Fig. 9 bezeichnet 1 ein Rohr für die Zuführung des Trinkwassers und m ein Rohr für die Ableitung von warmen Wasser.

Durch den Aufbau und die Anordnung der Einrichtung zur Nutzbarmachung von Solarwärme gemäß der Erfindung, wie sie oben beschrieben und erläutert wurde, können Sonnenstrahlen in einer wirkungsvollen Weise und einem hohen Wirkungsgrad gebündelt und als Wärmeenergie praktisch nutzbar gemacht werden.

## Patentansprüche

1. Einrichtung zur Nutzbarmachung von Solarwärme, bei der eine rohrförmige Wärmesammlungseinheit (11) im Brennpunkt eines Sonnenstrahlenreflektors (6) in Form eines Paraboloids angeordnet ist, dadurch gekennzeichnet, daß eine vertikale Drehwelle (19) mitten durch den Reflektor (6) hindurch verläuft, während außerdem Horizontalwellen (21) für den Reflektor (6) vorgesehen sind, wobei sich entlang der Wärmesammlungseinheit (11) ein Kreislaufführungsrohr (12) erstreckt mit einer Anordung (13, 14) zur Verhinderung des Ablaufes kalter Flüssigkeit in der Mitte des Kreislaufführungsrohres (12), wobei die Flüssigkeitszufuhr (15, 17, 26) und Flüssigkeitabfuhr (16, 18, 28) teilweise in der als Hohlwelle ausgebildeten vertikalen Drehwelle (19) angeordnet und über ein Flüssigkeitseinlaßrohr (15) bzw. Flüssigkeitauslaßrohr (16) an die Anordnung zur Verhinderung des Ablaufes kalter Flüssigkeit angeschlossen sind und wobei diese Rohre (15, 16) in einer gemeinsamen horizontalen Ebene liegen und koaxial oder im wesentlichen koaxial auf die Achsen der Horizontalwellen (21) ausgerichtet sind.

2. Einrichtung nach Anspruch 1, dadurch gekennzeichnet, daß die vertikale Welle (19) als Doppelmantelrohr (20) mit einer Flüssigkeitszuführungsleitung (26) und einer Flüssigkeitsabführungsleitung (28) ausgebildet ist, wobei die Flüssigkeitszuführungsleitung (26) mit ihrem oberen Ende an den Einlaß (15) des Kreislaufführungsrohres (12) und die Flüssigkeitsabführungsleitung (28) mit ihrem oberen Ende an den Auslaß (16) des Kreislaufführungsrohres (12) angeschlossen ist.

3. Einrichtung nach Anspruch 1, dadurch gekennzeichnet, daß die metallische Reflektionsfläche des Sonnenstrahlenreflektors aus zwei Spiegelflächen (6, 6') besteht, die im Bereich der Vertikalwelle (19) einen Abstand voneinander besitzen.

4. Einrichtung nach einem der vorangehenden Ansprüche, dadurch gekennzeichnet, daß eine Einstellvorrichtung vorgesehen ist, mittels welcher dann, wenn die Windgeschwindigkeit einen vorbestimmten Wert überschreitet, die Horizontalwellen (21) durch einen Antrieb (35) gedreht werden, zur horizontalen Ausrichtung des Reflektors, während gleichzeitig die Vertikalwelle (19) zur unabhängigen Drehung freigebbar ist, wobei der Sonnenstrahlenreflektor in eine zum Drehpunkt unsymmetrische Stellung drehbar ist, oder ein Steuerelement (33) vorgesehen ist zur Minimierung der Windkräfte auf die Reflektionsflächen, die in Windrichtung ausgerichtet sind.

## Revendications

1. Dispositif pour l'utilisation d'énergie solaire dans lequel un élément collecteur de chaleur tubulaire (11) est disposé au foyer d'un réflecteur de rayonnement solaire (6) ayant la forme d'un paraboloïde, caractérisé en ce qu'un arbre de rotation vertical (19) traverse le réflecteur (6) en son milieu, tandis que le réflecteur (6) comporte en outre des axes horizontaux (21), un tuyau de circulation (12) s'étendant le long de l'élément collecteur de chaleur (11) et comportant en son milieu un dispositif (13, 14) pour empêcher l'écoulement de liquide froid, l'entré de liquide (15, 17, 26) et la sortie de liquide (16, 18, 28) étant partiellement disposées dans l'arbre de rotation (19) qui a la forme d'un arbre creux, et étant respectivement raccordées par un tuyau (15) d'entrée de liquide et un tuyau (16) de sortie de liquide au dispositif empêchant l'écoulement de liquide froid, ces tuyaux (15, 16) étant situés dans un plan horizontal commun, leur alignement étant coaxial ou sensiblement coaxial aux axes des arbres horizontaux (21).

2. Dispositif suivant la revendication 1, caractérisé en ce que l'arbre vertical (19) a la forme d'un tube (20) à double paroi, comportant une conduite d'introduction du liquide (26) et une conduite d'évacuation du liquide (28), la conduite (26) d'introduction du liquide étant raccordée à sa partie supérieure à l'entrée (15) du tuyau de circulation (12) et la conduite d'évacuation du liquide (28) étant raccordée à sa partie supérieure à la sortie (16) du tuyau de circulation (12).

3. Dispositif suivant la revendication 1, caractérisé en ce que la surface de réflexion métallique du réflecteur de rayonnement solaire est constitué de deux surfaces réfléchissantes (6, 6') qui, dans la zone de l'axe vertical (19), definissent un intervalle entre elles.

4. Dispositif suivant l'une des revendications précédentes, caractérisé en ce qu'il est prévu un dispositif de réglage au moyen duquel, lorsque la vitesse du vent dépasse une valeur prédéterminée, on fait tourner les axes horizontaux (21) par un entraînement (35), pur l'orientation horizontale du réflecteur tandis que, simultanément, l'arbre vertical (19) peut être rendu libre de tourner independamment, le réflecteur de rayonnement solaire étant susceptible de tourner vers une position non symetrique par rapport au point de rotation, ou un élément de commande (33) est prévu pour minimiser les forces du vent sur les surfaces réfléchissantes qui sont orientées dans le sens du vent.

**Claims**

1. A device for the utilisation of solar heat including a tubular heat collecting unit (11) arranged at the focal point of a parabolic sun ray reflector (6), caracterised in that a hollow vertical rotary shaft (19) passes centrally through the reflector (6) and horizontal shafts (21) are provided for the reflector (6), a liquid recycling pipe (12) extends along the heat collecting unit (11) which unit has means (13, 14) for preventing the discharge of cold liquid at the centre of the liquid recycling pipe (12), an inlet (15, 17, 21) and an outlet (16, 18, 28) for the liquid partly situated in the vertical rotary shaft (19) and connected to said means for preventing the discharge of cold liquid by a liquid inlet tube (15) or a liquid outlet tube (16), the inlet and outlet tubes (15, 16) being located in a common horizontal plane and being directed substantially coaxially of the axes of the horizontal shafts (21).

2. A device according to claim 1, characterised in that the vertical shaft (19) is a double-walled tube (20) having a supply conduit (26) and a discharge conduit (28), the supply conduit (26) being connected at its upper end to the inlet (15) of the liquid recycling pipe (12) and the discharge conduit (28) being connected at its upper end to the outlet (16) of the liquid recycling pipe (12).

3. A device according to claim 1, characterised in that the reflective surfaces of the sun ray reflector are metallic and include two mirror faces (6, 6') having a spacing therebetween in the region of the vertical shaft (19).

4. A device according to any one of the preceding claims characterised by an adjustment device arranged so that when the wind velocity exceeds a predetermined value the horizontal shafts (21) rotate by drive means (35) to align the reflector to the horizontal and, at the same time, the vertical shaft (19) is freed to rotate independently such that the reflector can be rotated into a non-symmetrical position relative to its fulcrum, or a control element (33) is provided to minimise the strength of the wind on the reflective surfaces which face the direction of the wind.

0 015 487

# FIG.1

# FIG.2

# FIG.3

1

0015 487

# FIG. 4

# FIG. 5

# FIG. 6

FIG.7

FIG.8

FIG.9